# EUROPÄISCHE PATENTSCHRIFT

(11) **EP 1 177 094 B1**
(45) Veröffentlichungstag und Bekanntmachung des Hinweises auf die Patenterteilung: **29.12.2004**
(21) Anmeldenummer: 00922670.5
(22) Anmeldetag: 02.05.2000
(51) Int. Cl.: B32B 15/08, B60R 13/08, G10K 11/162, B60R 13/02

(54) **FLÄCHIGES MEHRSCHICHT-DÄMPFUNGSELEMENT UND VERFAHREN ZUR BEFESTIGUNG DIESES ELEMENTES AUF EINEM ZU ENTDRÖHNENDEN BLECH**
FLAT MULTILAYER DAMPING ELEMENT AND METHOD FOR FASTENING THIS ELEMENT TO A METAL SHEET TO BE SOUND DEADENED
ELEMENT D'ATTENUATION MULTICOUCHE PLAT ET PROCEDE PERMETTANT DE LE FIXER SUR UNE TOLE A INSONORISER

(30) Priorität: 07.05.1999 DE 19921601
(43) Veröffentlichungstag der Anmeldung: 06.02.2002
(73) Patentinhaber: CWW-GERKO Akustik GmbH, 67547 Worms (DE)
(72) Erfinder: FREIST, Christoph, D-33613 Bielefeld (DE); POLAK, Josef, D-55294 Bodenheim (DE)
(74) Vertreter: Leineweber, Jürgen, Dipl.-Phys.
(86) Internationale Anmeldenummer: PCT/EP2000/003907
(87) Internationale Veröffentlichungsnummer: WO 2000/068005

(56) Entgegenhaltungen:
- DE-A- 3 627 725
- DE-U- 9 208 184
- GB-A- 2 216 081
- US-A- 4 833 018
- US-A- 5 280 991
- US-A- 5 831 225

## Beschreibung

Die Erfindung bezieht sich auf ein Mehrschicht-Dämpfungselement nach dem Oberbegriff des Patentanspruchs 1 sowie auf ein Verfahren zur Befestigung eines derartigen Elementes auf einem zu entdröhnenden Blech nach dem Oberbegriff des Patentanspruchs 11.

Mehrschicht-Dämpfungselemente - im Fachjargon Entdröhnungsfolien genannt - werden z.B. im Automobilbau eingesetzt. Durch ein möglichst vollflächiges Verkleben dieser Elemente mit Karosserie- oder anderen -blechen wird deren Entdröhnung erreicht.

Mehrschicht-Dämpfungssysteme der hier betroffenen Art sind aus dem DE-U-92 08 184 bekannt. Sie dienen der Körperschalldämpfung zu entdröhnender Bleche oder der Schallisolation. Einfache und zweckmäßige Ausführungen bestehen aus einer ersten, zur Auflage auf dem Karosserieblech bestimmten Schicht aus akustisch wirksamem Material und einer zweiten, die maßgebliche Verbesserung des Verlustfaktors erlaubenden Schicht aus einem Metallblech, z.B. Aluminium. Das akustisch wirksame Material der ersten Schicht hat die Eigenschaft, daß es bei einem Wärmebehandlungsschritt sein Volumen vergrößert. Dazu ist es beispielsweise mit einem Treibmittel versetzt. Während der Wärmebehandlung expandiert der akustisch wirksame Werkstoff und füllt den Raum zwischen dem zu entdröhnenden Karosserieblech und der metallischen Abdeckschicht vollständig aus. Eine vollflächige Auflage der Entdröhnungsfolie auf dem zu entdröhenden Blech wird dadurch erreicht.

Zur Fixierung von Entdröhnungsfolien der beschriebenen Art - auch in vertikaler Lage und über Kopf - vor der Wärmebehandlung auf dem zu entdröhnenden Blech (im weiteren Vormontage genannt) ist es bekannt, Bolzen einzusetzen, die mit dem zu entdröhnenden Blech verbunden, z.B. verschweißt, sind. Die Entdröhnungsfolien sind mit korrespondierenden Durchbrechungen ausgerüstet, die die Bolzen nach ihrer Montage durchsetzen. Auf die aus der Entdröhnungsfolie hervorragenden freien Enden der Bolzen werden nach dem Aufsetzen der Entdröhnungsfolie Clipse befestigt. Diese haben zu einen den Zweck, die Entdröhnungsfolie in ihrer vormontierten Lage - auch vertikal und über Kopf - zu haltern. Außerdem wird durch die Clipse ein gewünschter Abstand der äußeren Schicht der Entdröhnungsfolie vom zu entdröhnenden Blech definiert. Nach der beschriebenen Vormontage erfolgt die Wärmebehandlung. Das akustisch wirksame Material füllt den Raum zwischen Karosserieblech und Abdeckblech vollständig aus.

Aus der US-A- 58 31 225 ist eine Trennschicht mit akustischen Eigenschaften bekannt, die aus einer ersten, aus akustisch wirksamem Material bestehenden Schicht und aus einer Deckschicht besteht. Die Vormontage besteht darin, dass das zu entdröhnende Blech mit einer Vielzahl von Bohrungen versehen wird, und dass entsprechend viele Befestigungselemente mit der Deckschicht verschweißt werden, welche im Bereich ihrer freien Enden einen vergrößerten Durchmesser haben. Die Montage der Deckschicht erfolgt in der Weise, dass die Köpfe der Befestigungselemente durch die Bohrungen in dem zu entdröhnenden Blech hindurchgesteckt werden. Auch diese Art der Vormontage ist aufwendig und hat den weiteren Nachteil, dass gerade die zu entdröhnende Schicht mit einer Vielzahl von Durchbrechungen versehen werden muss. Außerdem hat die aus akustisch wirksamem Material bestehende Schicht nicht die Eigenschaft, bei einer Wärmebehandlung ihr Volumen zu vergrößern.

Die beschriebenen, der Wärmebehandlung vorhergehenden Schritte der Vormontage, sind aufwendig. Die zu entdröhnenden Blechabschnitte müssen mit einer Vielzahl Bolzen, die Entdröhnungsfolien mit einer Vielzahl der Lage der Bolzen exakt entsprechenden Löchern versehen werden. Das Aufsetzen der Entdröhnungsfolien ist schwierig, da die Bolzen in relativ kleine Löcher eingeführt werden müssen. Außerdem ist die Befestigung einer Vielzahl von Clipsen auf den freien Enden der Bolzen zeitaufwendig.

Der vorliegenden Erfindung liegt die Aufgabe zugrunde, die Vormontage von Entdröhnungsfolien auf den zu entdröhnenden Blechen zu vereinfachen.

Erfindungsgemäß wird diese Aufgabe durch die kennzeichnenden Merkmale der Patentansprüche 1 und 11 gelöst.

Durch die Anwendung der Erfindung ist es nicht mehr nötig, das zu entdröhnende Blech mit einer Vielzahl von Bolzen oder Bohrungen zu versehen. Die Abstandshalter nach der Erfindung müssen zwar auf der zweiten Schicht (Metallschicht) der Entdröhnungsfolie befestigt werden; dieses kann jedoch vor dem Aufbringen des akustisch wirksamen Materials geschehen, so daß die Ausrüstung dieser Schicht mit Löchern nicht mehr erforderlich ist. Zweckmäßig werden die Abstandshalter auf der zweiten Schicht durch Kleben befestigt.

Zur Befestigung der freien Stirnseiten der Abstandshalter auf dem zu entdröhnenden Blech während der Vormontage können Kleber oder Magnetkräfte eingesetzt werden. Die dadurch erzeugten Haftkräfte müssen mindestens so lange wirksam sein, bis der Wärmebehandlungsschritt, mit dem eine möglichst vollflächige Verbindung der ersten akustisch wirksamen Schicht mit dem zu entdröhnenden Blech erreicht wird, abgeschlossen ist. Während der Wärmebehandlung bzw. der Expansion der ersten Schicht sorgen die Abstandshalter dafür, daß der gewünschte Abstand zwischen dem zu entdröhnenden Blech und der Metallschicht der Entdröhnungsfolie eingehalten wird.

Weitere Vorteile und Einzelheiten der Erfindung sollen anhand von in den Figuren 1 bis 7 schematisch dargestellten Ausführungsbeispielen erläutert werden. Es zeigen
- Figuren 1 und 2 Teilschnitte, die das Verfahren zur Befestigung von Entdröhnungsfolien auf einem Blech nach dem Stand der Technik erkennen lassen,
- Figuren 3 bis 6 Teilschnitte, die das Verfahren nach der Erfindung erkennen lassen, und
- Figur 7 einen Teilschnitt durch ein Ausführungsbeispiel für eine Abstandshalter tragende Schicht einer Entdröhnungsfolie nach der Erfindung.

In allen Figuren ist das zu entdröhnende Blech mit 1 und die Entdröhnungsfolie mit 2 bezeichnet. Die Entdröhnungsfolie 2 umfaßt jeweils eine erste, zur Auflage auf dem Blech 1 bestimmte Schicht 3 aus akustisch wirksamem Werkstoff sowie eine äußere Metallschicht 4.

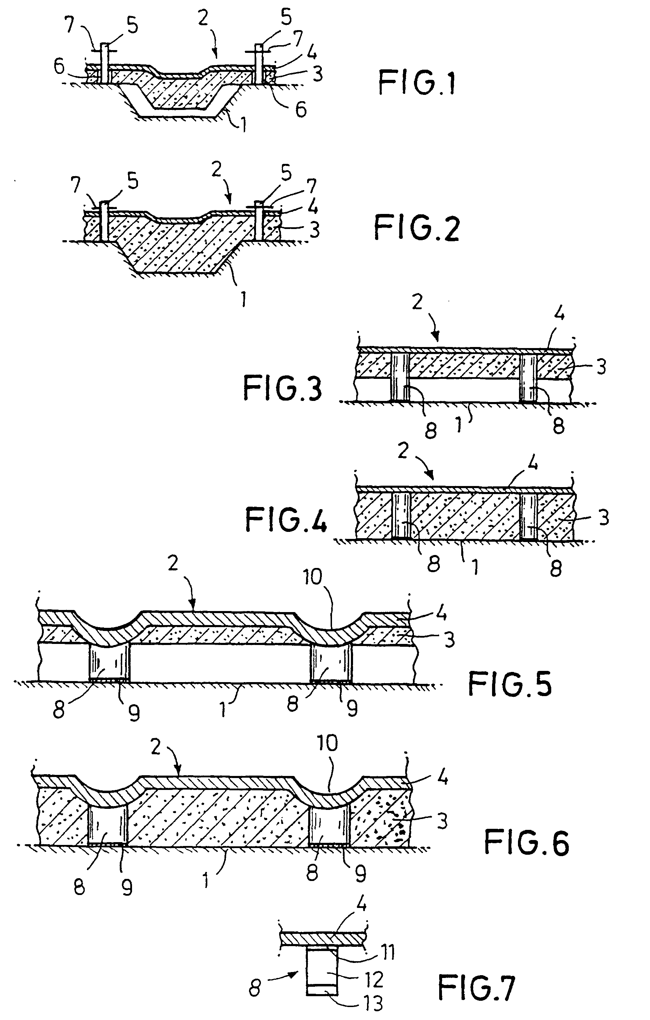

Figur 1 zeigt, daß das Blech 1 mit Bolzen 5 und die Entdröhnungsfolie 2 mit korrespondierenden Durchbrechungen 6 ausgerüstet sind. Die Vormontage der Entdröhnungsfolie 2 erfolgt in der Weise, daß sie zunächst derart auf das Blech 1 aufgesetzt wird, daß auf den freien Enden der die Durchbrechungen 6 durchsetzenden Bolzen 5 Clipse 7 befestigt werden können. Die Bolzen 5 fixieren die Entdröhnungsfolie 2 in ihrer gewünschten Lage, die Clipse 7 bestimmen einen definierten Abstand. Figur 2 zeigt den Zustand nach der Wärmebehandlung (z.B. in einem Lacktrocknungsofen). Die erste Schicht 3 hat ihr Volumen vergrößert und liegt dem Blech 1 vollflächig auf, auch wenn dieses - wie dargestellt - Sicken aufweist. Eine Klebeschicht zwischen Schicht 3 und Blech 1 ist nicht dargestellt. Sie ist nötig, wenn der Werkstoff der Schicht 3 nicht selbstklebend ist.

Der wesentliche Unterschied zwischen dem Stand der Technik und der Erfindung besteht darin, daß die Metallschicht 4 mit Abstandshaltern 8 ausgerüstet ist, die die Bolzen und Clipse ersetzen. Die Abstandshalter können vor dem Aufbringen der zweiten Schicht 3 z.B. durch Kleben mit der Metallschicht 4 verbunden werden. Die Figuren 3 bis 7 zeigen Ausführungsbeispiele für den Abstandshalter 8, für die es eine Vielfalt von Gestaltungsmöglichkeiten gibt.

Beim Ausführungsbeispiel nach den Figuren 3 und 4 werden Magnetkräfte verwendet, um die Entdröhnungsfolie 2 auf dem Blech 1 zu fixieren. Voraussetzung ist, daß das Blech 1 aus ferromagnetischem Werkstoff besteht und daß die Abstandshalter 8 magnetisch sind.

Die Abstandshalter 8 nach den Figuren 3 und 4 sind beispielsweise Zylinder, die aus einer Magnetfolie gefertigt (z.B. gestanzt) wurden. Magnetfolien bestehen aus körperschalldämmendem Werkstoff und enthalten Magnetpulver, das in der gewünschten Weise magnetisiert werden kann. In dem in Figur 3 dargestellten Zustand wird die Entdröhnungsfolie 2 auf das zu entdröhnende Blech 1 aufgesetzt. Die Magnetkräfte bewirken die gewünschte Fixierung. Figur 4 zeigt den Zustand nach der Wärmebehandlung. Die Stärke der Magnetkräfte und/oder die Anzahl der Abstandshalter müssen so gewählt werden, daß sie sich während der Expansion der Schicht 3 nicht vom Blech 1 lösen.

Die Figuren 5 und 6 zeigen eine Ausführungsform, bei der Klebekräfte verwendet werden, um die Entdröhnungsfolie während der Vormontage auf dem Blech 1 zu fixieren. Dazu sind die freien Stirnseiten der Abstandshalter 8 mit einer Klebeschicht 9 versehen (Haftkleber, drucksensitiver Kleber o.ä.). Die Klebekräfte bewirken die gewünschte Fixierung. Figur 6 zeigt den Zustand nach der Wärmebehandlung. Die Abstandshalter 8 können bei dieser Ausführungsform aus beliebigem Werkstoff bestehen. Vorteilhaft sind kurze Stifte oder Stababschnitte aus Kunststoff mit beliebigem Querschnitt.

Die Figuren 5 und 6 zeigen noch die Besonderheit, daß die Metallschicht 4 an den Stellen der Befestigung der Abstandshalter Vertiefungen 10 aufweisen, so daß relativ kurze Abstandshalter 8 eingesetzt werden können.

Figur 7 zeigt die Metallfolie 4 mit einem darauf durch Kleben (Klebeschicht 11) befestigten Abstandshalter. Dieser ist zylindrisch ausgebildet und umfaßt einen aus Kunststoff bestehenden Abschnitt 12 und - stirnseitig - einen Magneten 13, der der Fixierung der Entdröhnungsfolien auf dem Blech 1 während der Vormontage dient.

Die dargestellten und beschriebenen Ausführungen weisen jeweils eine Entdröhnungsfolie 2 mit zwei Schichten 3, 4 auf, von denen die dem Blech 1 zugewandte Schicht 3 eine Expansionsschicht ist. Die Entdröhnungsfolie 2 kann auch mehrschichtig ausgebildet sein. Wesentlich ist, daß eine Schicht vorhanden ist, die die Abstandshalter trägt.

Bei einer vorteilhaften Ausführungsform ist es zweckmäßig, den in Figur 1 beschriebenen Stand der Technik mit der Erfindung zu kombinieren. Es können beispielsweise nur zwei Bolzen 5 vorhanden sein, die die Aufgabe haben, die Position der Entdröhnungsfolie 2 zu bestimmen. Im übrigen vielfach vorhandene Abstandshalter 8 übernehmen die Aufgabe der Fixierung sowie der Definition und Sicherung des Abstandes der Trägerfolie 4 vom Blech 1.

Die Erfindung erleichtert nicht nur die Vormontage, sie erlaubt auch Einsparungen bei den Vorbereitungen dazu (Entfall der Bolzen 5, Clipse 7 und Durchbrechungen 6 in der Folie 2); sie ist außerdem nicht nur bei ebenen sondern auch bei gewölbten Entdröhnungsfolien anwendbar.

## Patentansprüche

1. Entdröhnungsfolie (2) mit mindestens zwei Schichten (3, 4), von denen die zur möglichst vollfächigen Anlage an das zu entdröhnende Blech (1) bestimmte erste Schicht (3) der Entdröhnungsfolie (2) die Eigenschaft hat, bei einer Wärmebehandlung ihr Volumen zu vergrößern, **dadurch gekennzeichnet, dass** die Entdröhnungsfolie (2) mit Abstandshaltern (8) ausgerüstet ist, die auf der zweiten, oder weiteren Schicht (4) befestigt sind und die mit Mitteln (9, 13) zur Fixierung der Entdröhnungsfolie (2) auf dem zu entdröhnenden Blech (1) versehen sind, wobei als Fixierungsmittel (9, 13) Klebekräfte oder Magnetkräfte dienen.

2. Folie nach Anspruch 1, **dadurch gekennzeichnet, dass** die Mittel als auf die freie Stirnseite der Abstandshalter (8) aufgebrachte Klebeschicht (9) ausgebildet sind.

3. Folie nach Anspruch 1, **dadurch gekennzeichnet, dass** die Abstandshalter (8) zumindest ganz oder teilweise von Magneten (13) gebildet werden.

4. Folie nach Anspruch 3 , **dadurch gekennzeichnet, dass** der der Auflage auf dem zu entdröhnenden Blech (1) bestimmte Abschnitt/Teilabschnitt der Abstandshalter (8) magnetisch ist.

5. Folie nach Anspruch 4, **dadurch gekennzeichnet, daß** der dem zu entdröhnenden Blech (1) bestimmte Abschnitt der Abstandshalter (8) ein Magnet (13) ist, der zusammen mit einem Verbindungsstück (12), das an der zweiten oder weiteren Schicht (4) befestigt ist, den Abstandshalter (8) bildet.

6. Folie nach Anspruch 1, **dadurch gekennzeichnet, dass** die Abstandshalter (8) aus einem Magnetpulver enthaltendem Werkstoff, vorzugsweise Dämmwerkstoff (Körperschalldämpfung, Körperschallisolation), bestehen.

7. Folie nach einem der vorhergehenden Ansprüche, **dadurch gekennzeichnet, dass** die Entdröhnungsfolie (2) aus zwei Schichten (3, 4) besteht, daß die zweite Schicht (4) eine Metallschicht ist und daß die Abstandshalter (8) mit der zweiten Schicht (4) verklebt sind.

8. Folie nach Anspruch 7, **dadurch gekennzeichnet, dass** die Metallschicht (4) Vertiefungen (10) aufweist und dass die Abstandshalter (8) an den Stellen der Vertiefungen (10) befestigt sind.

9. Verfahren zur Befestigung einer Entdröhnungsfolie (2) mit mindestens zwei Schichten (3, 4) auf einem zu entdröhnenden Blech (1), wobei die zur möglichst vollflächigen Auflage auf das Blech (1) bestimmte erste Schicht (3) die Eigenschaft hat, bei einer Wärmebehandlung ihr Volumen zu vergrößern, wobei die Entdröhnungsfolie (2) mit Abstandshaltern (8) ausgerüstet ist, die auf der zweiten (oder weiteren) Schicht (4) befestigt sind und die mit Klebekräfte oder Magnetkräfte erzeugenden Mitteln (9, 13) zur Fixierung der Entdröhnungsfolie (2) auf dem zu entdröhnenden Blech (1) versehen sind, **dadurch gekennzeichnet, dass** die mit die erste Schicht (3) durchsetzenden Abstandshaltern (8) ausgerüstete Entdröhnungsfolie (2) mit Hilfe der Abstandshalter (8) auf dem zu entdröhnenden Blech (1) mit Hilfe der Klebekräfte oder Magnetkräfte fixiert wird und dass danach eine Wärmebehandlung erfolgt.

## Claims

1. Soundproofing foil (2) of at least two layers (3, 4) of which the first layer (3) is intended for full-surface contact with the sheet metal (1) to be soundproofed and has the characteristic of increasing its volume upon heat treatment and whereby said foil is **characterized by**:
the soundproofing foil (2) being equipped with spacers (8) fastened to a second or further layer (4), said spacers provided with means (9, 13) based on adhesive or magnetic forces to fasten the soundproofing foil (2) to the sheet metal (1) to be soundproofed.

2. Foil in accordance with claim 1 **characterized by**:
the fastening means consisting of a layer (9) of an adhesive on the free face of the spacers (8).

3. Foil in accordance with claim 1 **characterized by**:
the spacers (8) consisting entirely or at least partly of magnets (13).

4. Foil in accordance with claim 3 **characterized by**:
that part or component part of the spacers (8) intended for direct contact with the sheet metal (1) to be soundproofed being magnetic.

5. Foil in accordance with claim 4 **characterized by**:
the component part of the spacers (8) intended for contact with the sheet metal (1) to be soundproofed being a magnet (13) which, together with a connecting piece (12) that is fastened to the second or further layer (4), forms the spacer (8).

6. Foil in accordance with claim 1 **characterized by**:
the spacer (8) consisting of a material, preferably a damping material (attenuation or insulation of sound from mechanical vibrations), that is filled with a magnetic powder.

7. Foil in accordance with anyone of the previous claims **characterized by**:
the soundproofing foil (2) consisting of two layers (3, 4) with the second layer (4) being a metal backing and the spacers (8) being glued to the second layer (4).

8. Foil in accordance with claim 7 **characterized by**:
the metal backing (4) having indentations (10) and the spacers (8) being fastened at the locations of these indentations (10).

9. Procedure for fastening a soundproofing foil (2) of at least two layers (3, 4) on a sheet metal (1) to be soundproofed, whereby the first layer (3), intended for full-surface contact with the sheet metal (1), has the characteristic of increasing its volume upon heat treatment and whereby said soundproofing foil (2) is equipped with spacers (8) fastened to a second or further layer (4) and said spacers are provided with fastening means (9, 13) based on adhesive or magnetic forces to fasten the soundproofing foil (2) to the sheet metal (1) to be soundproofed, whereby said procedure is **characterized by**:
the soundproofing layer (3), after having been fully equipped with spacers (8) extending through the first layer (3), is fastened to the sheet metal (1) to be soundproofed with help of the adhesive or magnetic forces of the spacers (8) and is, subsequently, subjected to a heat treatment.

## Revendications

1. Feuille antisonique (2) comprenant au moins deux couches (3, 4), dont la première couche (3) de la feuille antisonique (2) destinée à être appliquée le plus complètement possible sur la surface de la tôle à insonoriser (1) présente la propriété d'agrandir son volume lors d'un traitement thermique, **caractérisée en ce que** la feuille antisonique (2) est munie d'écarteurs (8) fixés sur la deuxième ou autre couche (4) et dotés de moyens (9, 13) pour fixer la feuille antisonique (2) sur la tôle à insonoriser (1), des forces adhésives ou des forces magnétiques servant de moyen de fixation (9, 13).

2. Feuille selon la revendication 1, **caractérisée en ce que** les moyens présentent la forme d'une couche adhésive (9) appliquée sur la face frontale libre des écarteurs (8).

3. Feuille selon la revendication 1, **caractérisée en ce que** les écarteurs (8) sont formés du moins entièrement ou partiellement par des aimants (13).

4. Feuille selon la revendication 3, **caractérisée en ce que** le segment/segment partiel des écarteurs (8) destiné à être appliqué sur la tôle à insonoriser (1) est magnétique.

5. Feuille selon la revendication 4, **caractérisée en ce que** le segment des écarteurs (8) destiné à la tôle à insonoriser (1) est un aimant (13) qui forme l'écarteur (8) conjointement avec une pièce de liaison (12) fixée sur la deuxième ou autre couche (4).

6. Feuille selon la revendication 1, **caractérisée en ce que** les écarteurs (8) se composent d'un matériau contenant une poudre magnétique, de préférence d'un matériau isolant (insonorisation de la construction, isolation de la construction).

7. Feuille selon l'une quelconque des revendications précédentes, **caractérisée en ce que** la feuille antisonique (2) se compose de deux couches (3, 4), **en ce que** la deuxième couche (4) est une couche métallique et **en ce que** les écarteurs (8) sont collés à la deuxième couche (4).

8. Feuille selon la revendication 7, **caractérisée en ce que** la couche métallique (4) présente des creux (10) et **en ce que** les écarteurs (8) sont fixés aux emplacements des creux (10).

9. Procédé de fixation d'une feuille antisonique (2) comprenant au moins deux couches (3, 4) sur une tôle à insonoriser (1), dont la première couche (3) de la feuille antisonique (2) destinée à être appliquée le plus complètement possible sur la surface de la tôle (1) présente la propriété d'agrandir son volume lors d'un traitement thermique, la feuille antisonique (2) étant munie d'écarteurs (8) fixés sur la deuxième ou autre couche (4) et dotés de moyens (9, 13) engendrant des forces adhésives ou des forces magnétiques pour fixer la feuille antisonique (2) sur la tôle à insonoriser (1), **caractérisé en ce que** la feuille antisonique (2) équipée d'écarteurs (8) traversant la première couche (3) est fixée à l'aide des écarteurs (8) sur la tôle à insonoriser (1) au moyen des forces adhésives ou des forces magnétiques, et **en ce qu'**ensuite un traitement thermique est effectué.
